# EUROPÄISCHE PATENTSCHRIFT

(11) **EP 0 856 480 B1**
(45) Veröffentlichungstag und Bekanntmachung des Hinweises auf die Patenterteilung: **12.03.2003**
(21) Anmeldenummer: 97122136.1
(22) Anmeldetag: 16.12.1997
(51) Int. Cl.: B65G 9/00

(54) **Schienengeführtes Transportmittel und Transportanlage mit derartigen Transportmitteln**
Rail guided transport means and transport system with such transport means
Moyen de transport guidé sur rails et système de transport avec un tel moyen de transport

(30) Priorität: 31.01.1997 CH 22197
(43) Veröffentlichungstag der Anmeldung: 05.08.1998
(73) Patentinhaber: Denipro AG, 8570 Weinfelden (CH)
(72) Erfinder: Eberle, Jürg, 8340 Hinwil (CH)
(74) Vertreter: Patentanwälte Schaad, Balass, Menzl & Partner AG

(56) Entgegenhaltungen:
- FR-A- 2 458 213
- FR-A- 2 502 106
- US-A- 3 155 051
- US-A- 3 696 890
- US-A- 4 351 241

## Beschreibung

Die Erfindung betrifft ein schienengeführtes Transportmittel gemäss dem Oberbegriff von Anspruch 1. Die Erfindung betrifft weiter eine Transportanlage mit Transportmitteln gemäss dem Oberbegriff von Anspruch 11.

Aus der Patentschrift CH-A-382 768 ist eine Transportanlage für Druckereierzeugnisse bekannt, welche eine Mehrzahl einzeln beweglicher Transportmittel, ausgestaltet als Wagen, umfasst, die an einer in sich geschlossenen Führungsschiene gelagert sind. An jedem Transportmittel ist ein über eine Steuerung betätigbarer Greifer angeordnet, der jeweils ein Druckereierzeugnis an einer Beschickungsstation erfasst, dieses transportiert, und an einer Abgabestelle wieder freigibt. Die leeren Transportmittel werden entlang der Führungsschiene wieder der Beschickungsstation zugeführt, wo sie ein neues Druckereierzeugnis erfassen. Diese bekannten Transportmittel sind relativ gross und schwer ausgestaltet, was den Nachteil aufweist, dass die Druckereierzeugnisse mit geringer Geschwindigkeit förderbar sind, und dass die Druckereierzeugnisse im Förderstrom einen relativ grossen gegenseitigen Abstand aufweisen, was die Förderleistung der Transportanlage begrenzt.

Es ist Aufgabe der vorliegenden Erfindung ein Transportmittel und eine Transportanlage zu schaffen, die wirtschaftlich vorteilhafter ist.

Diese Aufgabe wird gelöst mit einem schienengeführten Transportmittel aufweisend die Merkmale gemäss Anspruch 1. Diese Aufgabe wird weiter gelöst mit einer Transportanlage aufweisend die Merkmale gemäss Anspruch 11.

Die Unteransprüche 2 bis 10 beziehen sich auf weitere, vorteilhaft ausgestaltete Transportmittel. Die Unteransprüche 12 bis 14 beziehen sich auf weitere, vorteilhafte Ausgestaltungen der Transportanlage.

Die Aufgabe wird insbesondere gelöst mit einem schienengeführten Transportmittel, insbesondere zum Fördern von Druckereierzeugnissen, welches einen Transportmittelkörper mit zwei Schenkeln umfasst, welche an den einander zugeordneten Seiten je zwei kreuzweise gegengleich versetzt angeordnete Gleit- oder Rollmittel aufweisen, wobei die Gleit- oder Rollmittel in Verlaufsrichtung der Schenkel derart gegenseitig beabstandet angeordnet sind, dass eine Führungsschiene zwischen den Gleit- oder Rollmitteln Platz findet.

In einer Ausführungsform des Transportmittels ist der Transportmittelkörper u-förmig verlaufend ausgestaltet.

Die Gleitmittel sind in einer Ausführungsform des Transportmittels als Schlitten ausgestaltet, die entlang der Führungsschiene gleiten. In einer bevorzugten Ausführungsform des Transportmittels sind die Rollmittel als Räder ausgestaltet.

Die erfindungsgemässe Transportanlage umfasst eine Mehrzahl von Transportmitteln, welche auf wenigstens einer Führungsschiene angeordnet und in Verlaufsrichtung der Führungsschiene förderbar sind. Die Räder der Transportmittel liegen beidseitig auf der Führungsschiene auf, wobei die Räder vorteilhafterweise einen Spurkranz aufweisen und aussengeführt mit der Führungsschiene in Wirkverbindung sind, um eine Querbewegung des Transportmittels bezüglich der Führungsschiene zu verhindern. Jedes Transportmittel ist, ausser zu Unterhaltszwecken, unabnehmbar mit der das Führungssystem bildenden Führungsschiene verbunden, und ist in jeder beliebigen Verlaufsrichtung der Führungsschiene, insbesondere auch in vertikaler Richtung sicher förderbar. Bei einer beispielsweise horizontal verlaufenden Führungsschiene liegen somit zwei Räder eines Transportmittels oben auf der Führungsschiene auf, während die restlichen beiden Räder unterhalb der Führungsschiene angeordnet sind. Das Transportmittel kann auch als ein Wagen bezeichnet werden. Am erfindungsgemässen Transportmittel ist beispielsweise ein Haltemittel wie ein Greifer befestigt, der zum Fassen und Freigeben eines Druckereierzeugnisses dient.

Das erfindungsgemässe Transportmittel weist den Vorteil einer bezüglich der Förderrichtung sehr kurzen Bauweise auf, was zum Beispiel Druckereierzeugnisse, die jeweils einzeln am Greifer eines Transportmittels gehalten sind, mit geringem gegenseitigen Abstand beziehungsweise in dichter Folge zu fördern erlaubt. Obwohl das erfindungsgemässe Transportmittel einen bezüglich der Förderrichtung sehr kurzen Radabstand aufweist, ist es durch die gewählte Anordnung der Räder oder Gleitmittel trotzdem weitgehend spielfrei an der Führungschiene gelagert und geführt. Dies erlaubt insbesondere auch schwere oder vom Greifer asymmetrisch gehaltene Lasten sicher zu fördern, in dem gewährleistet ist, dass das Transportmittel auch unter einer derartigen Förderlast weder aus der Führungsschiene springt noch sich bezüglich der Führungsschiene verkantet oder gar blockiert. Ein weiterer Vorteil ist darin zu sehen, dass die Transportmittel bei unterschiedlichsten Kurvenverläufen der Führungsschiene, selbst bei sehr geringen Krümmungsradien, problemlos förderbar sind. In einer vorteilhaften Ausgestaltung der Transportmittel weist der Transportmittelkörper speziell ausgebildete Kontaktabschnitte auf, an denen sich zwei nacheinander folgend auf der Führungsschiene angeordnete Transportmittel gegenseitig berühren können. Ein Vorteil dieser Ausbildung ist darin zu sehen, dass eine Kette von sich gegenseitig berührenden Transportmittel gebildet werden kann. So kann zum Beispiel bei einer ansteigend verlaufenden Führungsschiene eine Ketten von lose aneinander geordneten Transportmittel gebildet werden, wobei die im hinteren Abschnitt der Kette angeordneten Transportmittel von einem Fördermittel aktiv bewegt werden, und die vorderen Transportmittel durch die hinteren gestossen werden. Die Transportmittel bilden somit, solange durch die ansteigende Führungsschiene zwischen den Transportmitteln eine Wirkverbindung besteht, eine Art Kette mit losen Kettengliedern.

In einer bevorzugten Ausführungsform sind die beiden Schenkel des Transportmittelkörpers in Förderrichtung sowie in der zur Förderrichtung entgegengesetzten Richtung spiegelbildlich versetzt verlaufend angeordnet, damit sich die von den Schenkeln gehaltenen Räder nicht gegenseitig berühren.

Die Erfindung wird an Hand mehrerer Ausführungsbeispiele im Detail beschrieben. Es zeigen:
- Fig. 1: eine dreidimensionale Ansicht eines Transportmittels;
- Fig. 2: eine Frontansicht des Transportmittels gemäss Fig. 1 angeordnet auf einer Führungsschiene;
- Fig. 3: eine Schnittdarstellung des Transportmittels gemäss Fig. 2 aus Richtung (A-A) und (B-B);
- Fig. 4: eine Draufsicht des Transportmittels gemäss Fig. 1 mit eingezeichneten Berührungsstellen zwischen Spurkranz und Führungsschiene;
- Fig. 5: eine Seitenansicht des Transportmittels gemäss Fig. 2 aus Richtung (C-C);
- Fig. 6: eine Anordnung dreier zusammengeschobener Transportmittelkörper in Seitenansicht;
- Fig. 7: eine Draufsicht einer anderen Ausführungsform eines Transportmittels mit eingezeichneten Berührungsstellen zwischen Spurkranz und Führungsschiene;
- Fig. 8: eine Frontansicht des Transportmittels gemäss Fig. 7, angeordnet auf einer Führungsschiene;
- Fig. 9: eine Aufsicht auf ein Fördermittel zum Bewegen der Transportmittel;
- Fig. 10: ein Schnitt durch das Fördermittel gemäss Fig. 9 entlang der Linie D - D.

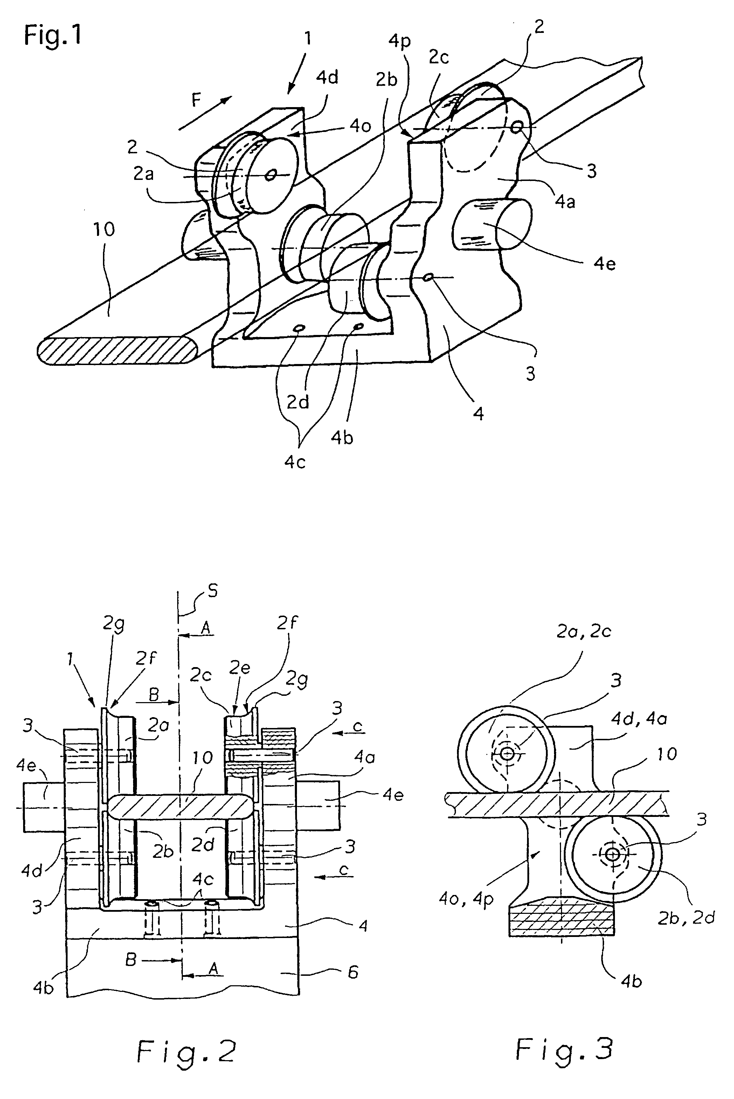

Fig. 1 zeigt in einer dreidimensionalen Darstellung ein Transportmittel 1, das einen u-förmig ausgestalteten Transportmittelkörper 4 und an dessen beiden Schenkeln 4a,4d angeordnete Gleit- oder Rollmittel 2, hier als Räder 2a,2b,2c,2d ausgestaltet, aufweist. Jeder Schenkel 4a,4d weist zwei in Verlaufsrichtung der Schenkel 4a,4d beabstandet angeordnete und parallel zum Steg 4b verlaufende Achsen 3 auf, an welchen jeweils ein Rad 2a,2b,2c,2d drehbar gehaltert ist. Die Führungsschiene 10 ist transparent dargestellt und wird von den Rädern 2a,2b,2c,2d beidseitig umfasst, so dass das Transportmittel 1, ausgestaltet als ein Wagen, geführt der Führungsschiene 10 folgt. Die vier Räder 2a,2b,2c,2d sind an den einander gegenüberliegend zugeordneten Seiten 4o, 4p je kreuzweise gegengleich versetzt angeordnet, so dass der Wagen 1 in Förderrichtung F oder in zur Förderrichtung F entgegengesetzter Richtung beweglich gelagert ist, und vollständig oder weitgehend spielfrei die Führungsschiene 10 umgibt.

Fig. 2 zeigt das Transportmittel 1 in einer Frontansicht, wobei insbesondere die u-förmige Ausgestaltung des Transportmittelkörpers 4, umfassend den Steg 4b und die beiden mit dem Steg 4b fest verbundenen Schenkeln 4a,4d, ersichtlich ist. Das Transportmittel 1 ist symmetrisch zur dargestellten Symmetrieachse S ausgestaltet. Die Schenkel 4a,4d weisen je zwei parallel zur Verlaufsrichtung des Stegs 4b verlaufende Achsen 3 auf, welche zur drehbaren Halterung der Räder 2a,2b,2c,2d bestimmt sind. Die Räder 2a,2b,2c,2d beziehungsweise die Achsen 3 sind an den gegenüberliegenden Seiten 4o,4p der beiden Schenkel 4a,4d angeordnet, wobei die jeweiligen Paare von Rädern 2a,2b;2c,2d in Verlaufsrichtung der Schenkel 4a,4d derart gegenseitig beabstandet sind, dass die Führungsschiene 10, welche im Querschnitt dargestellt ist, zwischen die Räder 2a,2b;2c,2d zu liegen kommt. Als Verlaufsrichtung der Schenkel 4a,4d wird, wie aus Fig. 2 ersichtlich, die vom Steg 4b ausgehende, gegen oben gegen die Räder 2a,2c hin verlaufende Richtung bezeichnet. Die Führungsschiene 10 ist seitlich abgerundet ausgestaltet, und jedes Rad 2a,2b,2c,2d weist einen entsprechend diesem Querschnittverlauf angepasst ausgestalteten Übergangsbereiche 2f sowie einen Spurkranz 2g auf, damit das Transportmittel 1 auch bezüglich quer zur Förderrichtung F wirkenden Kräften spielfrei oder weitgehend spielfrei an der Führungsschiene 10 anliegt. Der Transportmittelkörper 4 weist im Bereich des Steges 4b zwei als Durchbrechungen 4c ausgestaltete Befestigungsstellen auf, an denen zum Beispiel ein nur symbolisch dargestellter Greifer 6 zum Halten eines Druckereierzeugnisses befestigbar ist. Der Transportmittelkörper 4 weist zudem an jedem Schenkel 4a,4d einen Zapfen 4e auf, der bezüglich der Verlaufsrichtung der Schenkel 4a,4d senkrecht gegen aussen verlaufend vorsteht. Die Räder 2a,2b,2c,2d sind senkrecht bezüglich dem Verlauf des Querschnittes der Führungsschiene 10 angeordnet und weisen eine Kontaktfäche 2e auf, die parallel zur Oberfläche der Führungsschiene verläuft.

Die Achsen 3 könnten auch direkt am Transportmittelkörper 4 angeformt sein. Die Führungsschiene 10 sowie die Gleitoder Rollmittel 2 können aus unterschiedlichsten Materialien hergestellt sein, so dass verschiedene Materialpaarungen möglich sind. Die Führungsschiene 10 ist als ein umlaufendes, geschlossenes Gebilde ausgestaltet, das auch schaltbare Weichen aufweisen kann.

Fig. 3 zeigt eine Schnittdarstellung des Transportmittels 1 gemäss Fig. 2 in Betrachtungsrichtung A-A sowie in Betrachtungsrichtung B-B. Die Räder 2a,2c sowie die Räder 2b,2d als auch der Verlauf der Schenkel 4d,4a sind aus beiden Betrachtungsrichtungen A-A,B-B identisch angeordnet. Der Schenkel 4d,4a verläuft jeweils senkrecht zum Steg 4b. Die Räder 2a,2b beziehungsweise die Räder 2c,2d sind in Verlaufsrichtung des Schenkels 4d beabstandet angeordnet. Beide Räder 2a,2b beziehungsweise die beiden Räder 2c,2d liegen an der Führungsschiene 10 an, wobei die beiden Räder 2a,2b beziehungsweise die beiden Räder 2c,2d je kreuzweise gegengleich versetzt angeordnet sind.

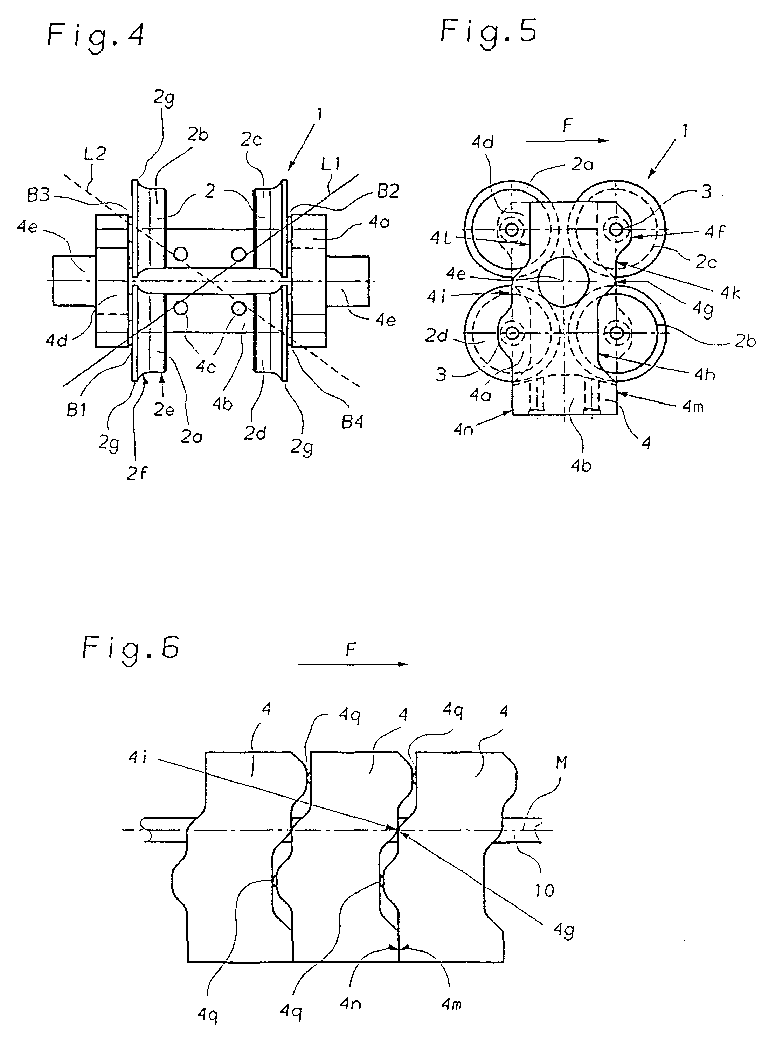

Die Draufsicht Fig. 4 des Transportmittels 1 gemäss Fig. 1 zeigt die beiden jeweils in Verlaufsrichtung der Führungsschiene 10 beabstandet angeordneten Paare von Rädern 2a,2b;2c,2d sowie den zwischen den Schenkeln 4a,4d verlaufenden Steg 4b. Zudem sind die Berührungsstellen B1,B2,B3,B4 des jeweiligen Spurkranzes 2g mit der nicht eingezeichneten Führungsschiene 10 dargestellt. Die Berührungsstellen B1,B2;B3,B4 der jeweils diagonal gegenüberliegend angeordneten Räder 2a,2c;2b,2d sind mit Linien L1,L2 verbunden. In einer vorteilhaften Anordnung sind die Räder 2a,2b,2c,2d derart dimensioniert und gegenseitig beabstandet angeordnet, dass die Linien L1,L2 senkrecht oder annähernd senkrecht zueinander verlaufen. Ein Vorteil dieser Anordnung ist darin zu sehen, dass alle am Transportmittel 1 angreifenden Kräfte ein etwa gleich grosses Moment erzeugen, was dem Transportmittel 1 selbst bei aus veränderlicher Richtung angreifenden Kräften, wie diese zum Beispiel beim Durchfahren einer Kurve auftreten, ein stabiles Fahrverhalten verleiht. Die angreifenden Momente lassen sich durch eine Verkleinerung des Hebelarmes reduzieren, was beim vorliegenden Transportmittel 1 durch eine Verkürzung der Länge zwischen den Berührungsstellen B1,B2;B3,B4 erfolgen kann.

Fig. 5 zeigt eine Seitenansicht des Transportmittels 1 gemäss Fig. 2 in Betrachtungsrichtung C-C. Die von den beiden Schenkeln 4a,4d durch die Achsen 3 drehbar gehaltenen Räder 2a,2b,2c,2d sind je paarweise, d.h. die Räder 2a und 2b beziehungsweise die Räder 2c und 2d, kreuzweise gegengleich versetzt angeordnet. Diese Anordnung der Räder 2a,2b,2c,2d erlaubt unter anderem einen bezüglich der Förderrichtung F sehr geringen Abstand zwischen den paarweise angeordneten Rädern 2a,2b; 2c,2d, so dass das Transportmittel 1 in Förderrichtung F eine sehr kurze Bauweise aufweisen kann. Zudem sind die beiden Schenkel 4a,4d des Transportmittelkörpers 4 in Förderrichtung F beziehungsweise in zur Förderrichtung F entgegengesetzten Richtung spiegelbildlich versetzt verlaufend angeordnet, wobei der Verlauf des Schenkels 4a vollständig ersichtlich ist und der Verlauf des Schenkels 4d nicht direkt sichtbar und daher strichliert dargestellt ist. Diese Ausgestaltung der Schenkel 4a,4d sowie die Anordung der Räder 2a,2b,2c,2d auf den Schenkeln 4a,4d ermöglicht es, dass sich die Räder 2a,2b,2c,2d des nachfolgend oder vorhergehend auf der Führungsschiene 10 angeordneten Transportmittels 1 nicht gegenseitig berühren.

Die beiden Schenkel 4a,4d weisen je eine in Förderrichtung F ausgerichtete Seitenkante 4k und eine zur Förderrichtung F entgegengesetzt ausgerichtete Seitenkante 4l auf. Beide Schenkel 4a,4d sind derart ausgestaltet, dass die Seitenkanten 4k,4l im mittleren Bereich einen Kontaktabschnitt 4g,4i aufweisen, wobei der Verlauf der Seitenkanten 4k,4l derar ausgestaltet ist, dass sich zwei benachbart angeordnete Transportmittel 1 bei geradlinig verlaufender Führungsschiene nur im Kontaktabschnitt 4g,4i gegenseitig berühren. Es kann sich als vorteilhaft erweisen, dass im Bereich des Stegs 4b zwei weitere Kontaktabschnitte 4m, 4n vorgesehen sind, die sich auch über die gesamte Breite des Stegs 4b erstrecken können.

Fig. 6 zeigt drei in Verlaufsrichtung F der Förderschiene 10 hintereinander angeordnete Transportmittel, die sich jeweils an den Kontaktabschnitten 4g,4i,4m,4n gegenseitig berühren. Der Übersichtlichkeit halber sind nur die Transportmittelkörper 4 dargestellt, ohne die natürlich ebenfalls vorhandenen Räder 2a,2b,2c,2d zu zeigen. Ein Vorteil der in Verlaufsrichtung des Schenkels 4a,4d versetzt angeordneten Kontaktabschnitte 4i,4n;4g,4m ist darin zu sehen, dass die Stosskräfte relativ gleichmässig verteilt auf den folgenden, anliegenden Transportmittelkörper 4 übertragbar sind. Es kann sich als vorteilhaft erweisen die Transportmittelkörper 4 zusätzlich mit einem Dämpfungselement 4q zu versehen, um den beim Zusammenstoss zweier Transportmittel 1 auftretenden Schlag zu mildern. Das Transportmittel 1 mit Transportmittelkörper 4 ist vorzugsweise derart ausgestaltet, dass die Kontaktabschnitte 4g,4i bezüglich der Schiene 10 auf deren Mittenlinien M oder im Bereich der Mittenlinie M angeordnet sind, wie dies aus der Seitenansicht gemäss Fig. 6 ersichtlich ist. Ein Vorteil dieser Anordnung der Kontaktabschnitte 4g,4i ist darin zu sehen, dass sich die Transportmittel 1 auch bei einer bogenförmig verlaufenden Führungsschiene 10 gegenseitig an den Kontaktabschnitten 4g,4i berühren. Die Kontaktabschnitte 4g,4i bilden die wesentlichste gegenseitige Berührungsfläche, in gewissen Ausführungsformen sogar die einzige Berührungsfläche zweier auf der Führungsschiene 10 nachfolgend angeordneter Transportmittel 1 aus.

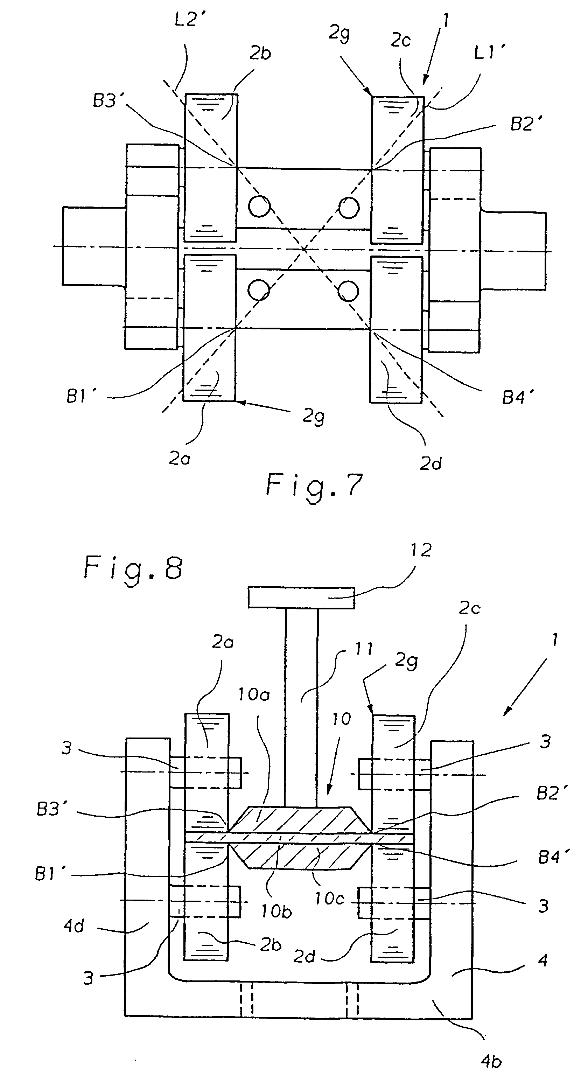

Fig. 7 zeigt eine Draufsicht einer weiteren Ausführungsform eines Transportmittels 1, dessen Räder 2a,2b,2c,2d zylinderförmig ausgestaltet sind, wobei die jeweils gegen innen ausgerichtete Kante der Räder 2a,2b,2c,2d als Spurkranz 2g ausgebildet ist. Die Linien L1',L2' verbinden wiederum die sich zwischen dem Spurkranz 2g und der Führungschiene 10 ergebenden Berührungsstellen B1',B2',B3',B4'. Die zwischen den Berührungsstellen B1',B2',B3',B4' verlaufenden Abschnitte der Linien L1',L2' sind im Vergleich zur Ausführungsform gemäss Fig. 4 kürzer ausgestaltet, so dass bei gleich grossen am Transportmittel 1 angreifenden Kräften geringere Momente erzeugt werden, und sich somit bessere Führungseigenschaften ergeben.

Die in Figur 8 dargestellte Frontansicht des Transportmittels 1 gemäss Fig. 7 zeigt einen u-förmig ausgestalteten Transportmittelkörper 4 mit zwei senkrecht zum Steg 4b verlaufenden Schenkeln 4a,4d. Die von den Achsen 3 drehbar gehaltenen Räder 2a,2b,2c,2d sind zylinderförmig ausgestaltet, wobei die jeweils gegen innen ausgerichtete Kante einen Spurkranz 2g ausbildet. Die Führungsschiene 10 umfasst ein Flachmaterial 10b sowie je ein darüber und darunter angeordnetes Profil 10a,10c aus zum Beispiel Kunststoff oder Aluminium. Der Spurkranz 2g weist mit den Profilen 10a,10b Berührungsstellen B1',B3'; B2',B4' auf. Die Schiene 10 ist über eine Trägervorrichtung 11 fest mit einer Haltevorrichtung 12 verbunden.

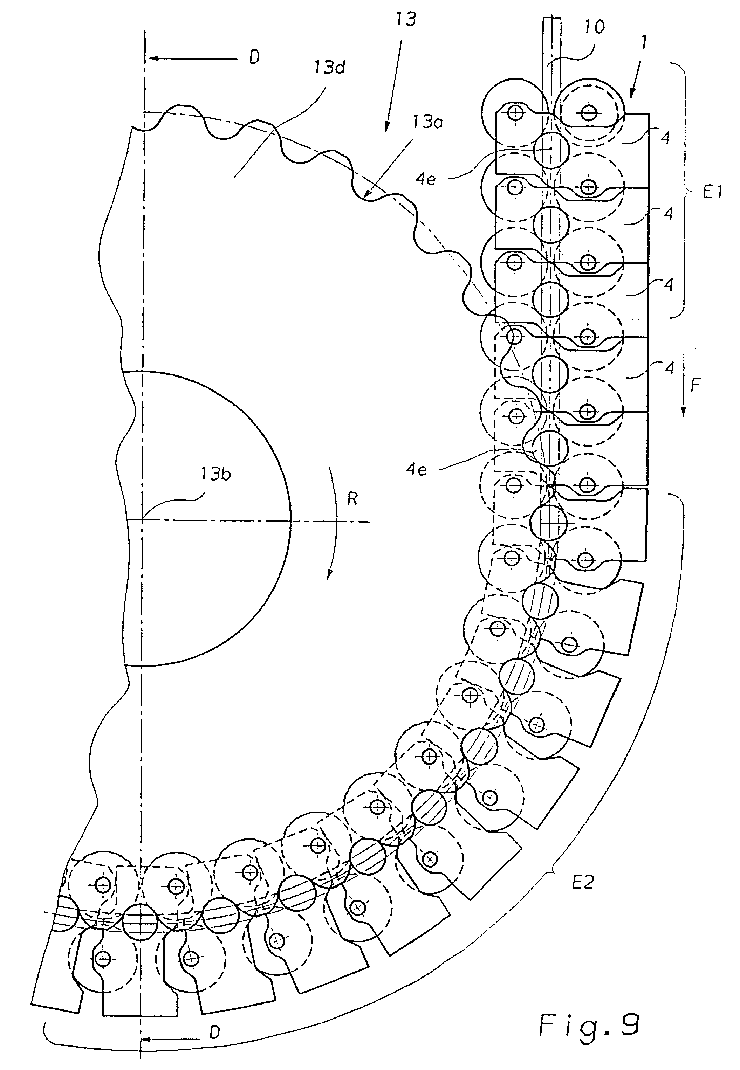

Die Aufsicht eines Fördermittels 13 gemäss Fig. 9 zeigt eine Führungsschiene 10, die eine dem Umfang des Fördermittels 13 angepasst verlaufende Krümmung aufweist. Die Transportmittel 1 gelangen vorerst in einen Einführungsbereich E1, in welchem sie einen geringen. gegenseitigen Abstand aufweisend oder sich gegenseitig berührend auf der Führungsschiene 10 angeordnet sind. Der im Einführungsbereich E1 angeordnete, vorgelagerte Abschnitt der Führungsschiene 10 weist vorzugsweise ein Gefälle auf, so dass die einzelnen Transportmittel 1 selbsttätig auf Grund der wirkenden Schwerkraft in eine sich gegenseitig berührende Lage gelangen. Das Fördermittel 13 ist als ein um eine horizontale Achse 13b in Drehrichtung R drehbares Zahnrad 13d ausgebildet. Das Zahnrad 13d weist über den Umfang verteilt angeordnete, den Zapfen 4e angepasst ausgestaltete Ausnehmungen 13a, welche im Förderabschnitt E2 mit den Zapfen 4e im Eingriff sind, so dass die Transportmittel 1 dem Verlauf der Führungsschiene 10 folgend in Förderrichtung F bewegt werden. Auf der linken, nicht dargestellten Seite der Fig. 9 kann die Führungsschiene 10 wieder in einen geradlinigen Verlauf übergehen, so dass sich die Transportmittel 1 vom Fördermittel 13 entfernen. Vorteilhafterweise weist der dem Fördermittel 13 nachfolgende Abschnitt der Führungsschiene 10 einen ansteigenden Verlauf auf, so dass die einzelnen Transportmittel 1 unter gegenseitiger Berührung, beziehungsweise unter Ausbildung einer Kette mit losen Kettengliedern, in eine höhere Lage gefördert werden. Darauffolgend kann die Führungsschiene 10 ein Gefälle aufweisen, so dass die Kette aufgelöst wird und die Transportmittel 1 sich, angetrieben durch die angreifende Schwerkraft, einzeln entlang der Führungsschiene 10 bewegen. Das Fördermittel 13 wird vorzugsweise derart angetrieben, dass am Umfang des Zahnrades 13d ständig eine ununterbrochene Kette von nacheinander folgenden Transportmittel 1 anliegt, damit die Transportmittel 1 sich kontinuierlich bewegend nach oben gefördert werden. Im Einlaufabschnitt E1 kann ständig ein Vorrat an Transportmittel 1 vorhanden sein. Dieser einen Puffer bildende Vorrat weist zudem den Vorteil auf, dass eintreffende Transportmittel 1 sicher abgebremst werden, bevor sie in den Eingriff des Fördermittels 13 gelangen.

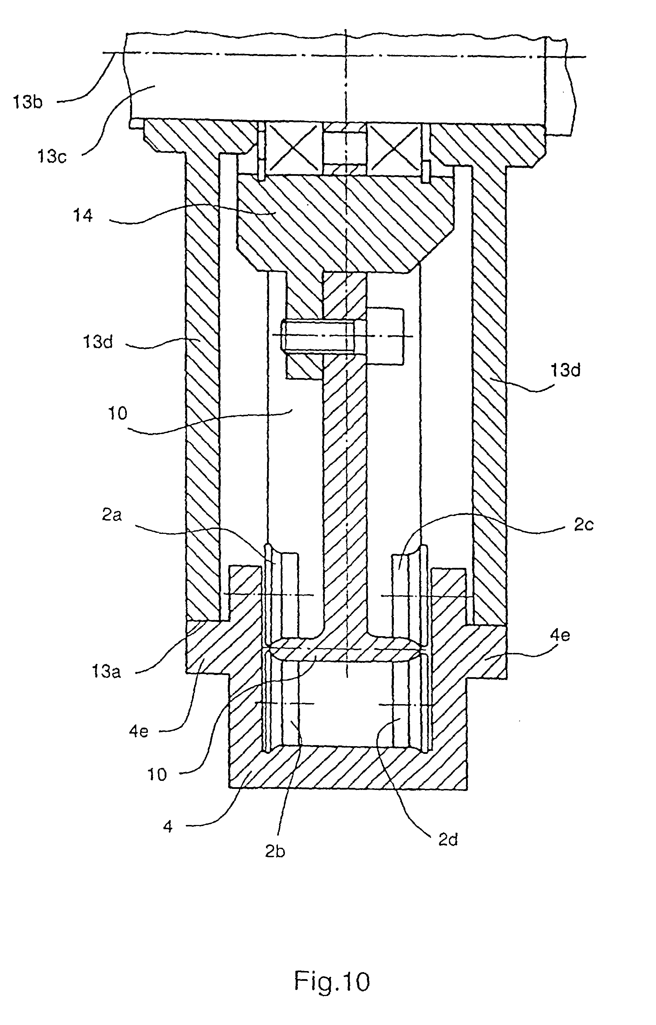

Fig. 10 zeigt einen Schnitt durch das Fördermittel 13 gemäss Fig. 9 entlang der Linie D-D. Die Führungsschiene 10 ist T-förmig ausgestaltet, weist einen gekrümmten Verlauf auf, und ist im Zentrum, ebenso wie die Welle 13c, von einer ortsfesten Stütze 14 gehalten. Beidseitig der Führungsschiene 10 ist je ein Zahnrad 13d angeordnet, welche mit der Welle 13c fest verbunden um das Drehzentrum 13b drehbar gelagert sind. Die Ausnehmungen 13a beziehungsweise die Zähne des Zahnrades 13d umfassen die Zapfen 4e beidseitig und bewegen die Transportmittel 1 in Förderrichtung F.

Das Fördermittel 13 könnte auch auf andere Weise ausgestaltet sein, so zum Beispiel als ein Schleppantrieb, um die Transportmittel 1 entlang einer geradlinig verlaufenden Führungsschiene 10 zu fördern.

## Patentansprüche

1. Schienengeführtes Transportmittel (1), insbesondere zum Fördern von Druckereierzeugnissen, **dadurch gekennzeichnet dass** es einen Transportmittelkörper (4) mit zwei Schenkeln (4a,4d), welche an den einander zugeordneten Seiten (4o, 4p) je zwei kreuzweise gegengleich versetzt angeordnete Gleit- oder Rollmittel (2) aufweisen, umfasst wobei die Gleit- oder Rollmittel (2) in Verlaufsrichtung der Schenkel (4a,4d) derart gegenseitig beabstandet angeordnet sind, dass eine Führungsschiene (10) zwischen den Gleit- oder Rollmitteln (2) Platz findet.

2. Transportmittel (1) nach Anspruch 1, **dadurch gekennzeichnet, dass** die Gleitmittel (2) als Schlitten ausgestaltet sind.

3. Transportmittel (1) nach Anspruch 1, **dadurch gekennzeichnet, dass** die Rollmittel (2) als Räder (2a,2b,2c,2d) ausgestaltet sind.

4. Transportmittel (1) nach Anspruch 3, **dadurch gekennzeichnet, dass** jedes Rad (2a,2b,2c,2d) einen entsprechend dem Querschnittverlauf der Führungsschiene (10) angepasst ausgestalteten Spurkranz (2g) aufweist.

5. Transportmittel (1) nach Anspruch 3, **dadurch gekennzeichnet, dass** die Räder (2a,2b,2c,2d) zylinderförmig ausgestaltet sind, wobei die dem gegenüberliegenden Rad (2a,2b,2c,2d) zugewandte Radseitenfläche zugleich den Spurkranz (2g) bildet.

6. Transportmittel (1) nach Anspruch 4 oder 5, **dadurch gekennzeichnet, dass** jeder Spurkranz (2g) mit der Führungsschiene (10) an einer Berührungsstelle (B1,B2,B3,B4) in Berührung ist, und dass die Räder (2a,2b,2c,2d) derart dimensioniert und angeordnet sind, dass die beiden jeweils die Berührungsstellen (B1,B2,B3,B4) zwischen zwei diagonal gegenüberliegend angeordneten Rädern (2a,2c;2b,2d) verbindende Linien (L1,L2) senkrecht oder annähernd senkrecht zueinander verlaufen.

7. Transportmittel (1) nach einem der vorhergehenden Ansprüche, **dadurch gekennzeichnet, dass** an zumindest einem der beiden Schenkel (4a,4d) ein Zapfen (4e) angeordnet ist, der insbesondere senkrecht zur Verlaufsrichtung des Schenkels (4a,4d) gegen aussen vorstehend verläuft.

8. Transportmittel (1) nach einem der vorhergehenden Ansprüche, **dadurch gekennzeichnet, dass** der Transportmittelkörper (4) eine Befestigungsstelle, insbesondere ausgestaltet als eine Durchbrechung (4c), zum Befestigen eines Haltemittels (6) wie eines Greifers für Druckereierzeugnisse aufweist.

9. Transportmittel (1) nach einem der vorhergehenden Ansprüche, **dadurch gekennzeichnet, dass** der Schenkel (4a,4d) an der in Bewegungsrichtung (F) weisenden Seite (4k) sowie an der in die entgegengesetzte Richtung weisenden Seite (41) einen Kontaktabschnitt (4g,4i,4m,4n) aufweist, welcher derart angeordnet und ausgestaltet ist, dass eine mögliche Berührung mit einem vor- oder nachlaufende Transportmittel (1) ausschliesslich am Kontaktabschnitt (4g,4i,4m,4n) erfolgt.

10. Transportmittel (1) nach einem der vorhergehenden Ansprüche, **dadurch gekennzeichnet, dass** die beiden Schenkel (4a,4d) bezüglich der Bewegungsrichtung (F) spiegelbildlich versetzt verlaufend ausgebildet sind.

11. Transportanlage umfassend Transportmittel (1) nach einem der Ansprüche 1 bis 10, welche auf wenigstens einer Führungsschiene (10) angeordnet und voneinander unabhängig in Verlaufsrichtung der Führungsschiene (10) förderbar sind.

12. Transportanlagen nach Anspruch 11, **dadurch gekennzeichnet, dass** die Transportmittel (1), insbesondere bei einer ansteigend verlaufenden Führungsschiene (10), in einer sich gegenseitig berührenden, kettenartigen Anordnung förderbar sind, durch Ausübung einer Schubkraft auf zumindest das jeweils letzte Transportmittel (1) in einer kettenartigen Anordung.

13. Transportanlage nach einem der Ansprüche 11 oder 12, **gekennzeichnet durch** ein am Zapfen (4e) eines Transportmittels (1) angreifendes und insbesondere eine Schubkraft übertragendes Fördermittel (13), das insbesondere als ein Zahnrad ausgebildet ist.

14. Transportanlage nach einem der Ansprüche 11 bis 13, **dadurch gekennzeichnet, dass** die Führungsschiene (10) als ein umlaufendes, geschlossenes Gebilde ausgestaltet ist, das auch schaltbare Weichen aufweisen kann.

15. Anlage zum Verarbeiten von Druckereierzeugnissen, aufweisend ein Transportmittel (1) nach einem der Ansprüche 1 bis 10 oder aufweisend eine Transportanlage nach einem der Ansprüche 11 bis 14.

## Claims

1. Railguided means of transport (1), in particular for the conveyance of printing products, **characterized in that** it comprises a means of transport body (4) with two legs (4a, 4d) which have, on the sides (4o, 4p) assigned to one another, in each case two sliding or rolling means (2) arranged so as to be offset crosswise and diametrically opposite one another, the sliding or rolling means (2) being arranged at a distance from one another in the direction of run of the legs (4a, 4d), in such a way that a guide rail (10) is accommodated between the sliding or rolling means (2).

2. Means of transport (1) according to Claim 1, **characterized in that** the sliding means (2) are designed as slides.

3. Means of transport (1) according to Claim 1, **characterized in that** the rolling means (2) are designed as wheels (2a, 2b, 2c, 2d).

4. Means of transport (1) according to Claim 3, **characterized in that** each wheel (2a, 2b, 2c, 2d) has a flange (2g) designed to be adapted to the cross-sectional profile of the guide rail (10).

5. Means of transport (1) according to Claim 3, **characterized in that** the wheels (2a, 2b, 2c, 2d) are of cylindrical design, the wheel side face which confronts the opposite wheel (2a, 2b, 2c, 2d) forming at the same time the flange (2g).

6. Means of transport (1) according to Claim 4 or 5, **characterized in that** each flange (2g) is in contact with the guide rail (10) at a contact point (B1, B2, B3, B4), and **in that** the wheels (2a, 2b, 2c, 2d) are dimensioned and arranged in such a way that the two lines (L1, L2) in each case connecting the contact points (B1, B2, B3, B4) between two wheels (2a, 2c; 2b, 2d) arranged diagonally opposite one another run perpendicularly or approximately perpendicularly to one another.

7. Means of transport (1) according to one of the preceding claims, **characterized in that** there is arranged on at least one of the two legs (4a, 4d) a stub (4e) which, in particular, runs perpendicularly to the direction of run of the leg (4a, 4d) so as to project outwards.

8. Means of transport (1) according to one of the preceding claims, **characterized in that** the means of transport body (4) has a fastening point, in particular designed as a perforation (4c), for fastening a holding means (6), such as a gripper for printing products.

9. Means of transport (1) according to one of the preceding claims, **characterized in that** the leg (4a, 4d) has, on the side (4k) pointing in the direction of movement (F) and on the side (41) pointing in the opposite direction, a contact portion (4g, 4i, 4m, 4n) which is arranged and designed in such a way that possible contact with a preceding or following means of transport (1) takes place solely on the contact portion (4g, 4i, 4m, 4n)

10. Means of transport (1) according to one of the preceding claims, **characterized in that** the two legs (4a, 4d) are designed to be offset mirror symmetrically with respect to the direction of movement (F).

11. Transport system comprising means of transport (1) according to one of Claims 1 to 10, which are arranged on at least one guide rail (10) and can be conveyed independently of one another in the direction of run of the guide rail (10).

12. Transport system according to Claim 11, **characterized in that**, in particular in the case of an ascending guide rail (10), the means of transport (1) can be conveyed in a chainlike arrangement, in which they touch one another, by the exertion of a pushing force on at least the means of transport (1) which is last in each case in a chainlike arrangement.

13. Transport system according to one of Claims 11 or 12, **characterized in that** there is a conveying means (13) which engages on the stub (4e) of a means of transport (1) and, in particular, transmits a pushing force and which is designed, in particular, as a gearwheel.

14. Transport system according to one of Claims 11 to 13, **characterized in that** the guide rail (10) is designed as a continuous closed structure which may also have switchable points.

15. Plant for the processing of printing products, having a means of transport (1) according to one of Claims 1 to 10 or having a transport system according to one of Claims 11 to 14.

## Revendications

1. Moyen de transport (1) guidé sur rails, en particulier pour le transport de produits d'imprimerie, **caractérisé en ce qu'**il comprend un corps de moyen de transport (4) muni de deux branches (4a, 4d), présentant, sur les côtés (4o, 4p) associés l'un à l'autre, chaque fois deux moyens de glissement ou de roulement (2), disposés mutuellement décalés en croix, les moyens de glissement ou de roulement (2) étant disposés à distance mutuelle dans la direction d'étendue des branches (4a, 4d), de manière à ce qu'un rail de guidage (10) puisse se placer entre les moyens de glissement ou de roulement (2).

2. Moyen de transport (1) selon la revendication 1, **caractérisé en ce que** les moyens de glissement (2) sont réalisés sous forme de traîneaux.

3. Moyen de transport (1) selon la revendication 1, **caractérisé en ce que** les moyens de roulement (2) sont réalisés sous forme de roues (2a, 2b, 2c, 2d).

4. Moyen de transport (1) selon la revendication 3, **caractérisé en ce que** chaque roue (2a, 2b, 2c, 2d) présente un boudin (2g) réalisé de façon adaptée, de façon correspondante à l'allure de section transversale du rail de guidage (10).

5. Moyen de transport (1) selon la revendication 3, **caractérisé en ce que** chaque roue (2a, 2b, 2c, 2d) est de forme cylindrique, la face latérale de roue, tournée vers la roue (2a, 2b, 2c, 2d) opposée, formant en même temps le boudin (2g).

6. Moyen de transport (1) selon la revendication 4 ou 5, **caractérisé en ce que** chaque boudin (2g) est en contact avec le rail de guidage (10) en un point de contact (B1, B2, B3, B4), et **en ce que** les roues (2a, 2b, 2c, 2d) sont dimensionnées et disposées de manière que les deux lignes (L1, L2), reliant chaque fois les points de contact (B1, B2, B3, B4) entre deux roues (2a, 2c ; 2b, 2d) disposées à l'opposé en diagonale, s'étendent perpendiculairement ou à peu près perpendiculairement l'une à l'autre.

7. Moyen de transport (1) selon l'une des revendications précédentes, **caractérisé en ce que**, sur au moins l'une des deux branches (4a, 4d), est disposé un tourillon (4e) s'étendant en saillie vers l'extérieur, en particulier perpendiculairement à la direction d'étendue de la branche (4a, 4d).

8. Moyen de transport (1) selon l'une des revendications précédentes, **caractérisé en ce que** le corps de moyen de transport (4) présente un point de fixation, en particulier réalisé sous la forme d'une traversée (4c), devant servir à fixer un moyen de maintien (6), tel qu'un preneur pour des produits d'imprimerie.

9. Moyen de transport (1) selon l'une des revendications précédentes, **caractérisé en ce que** la branche (4a, 4d) présente, sur le côté (4k) tourné dans le sens de déplacement (F), ainsi que sur le côté (41) tourné dans le sens opposé, un tronçon de contact (4g, 4i, 4m, 4n), disposé et configuré de manière à ce qu'un contact possible avec un moyen de transport (1) évoluant à l'avant ou à l'arrière s'effectue exclusivement sur le tronçon de contact (4g, 4i, 4m, 4n).

10. Moyen de transport (1) selon l'une des revendications précédentes, **caractérisé en ce que** les deux branches (4a, 4d) sont réalisées en s'étendant de façon décalée suivant une symétrie spéculaire, par rapport au sens de déplacement (F).

11. Système de transport comprenant des moyens de transport (1) selon l'une des revendications 1 à 10, disposés au moins sur un rail de guidage (10) et pouvant être véhiculés indépendamment les uns des autres dans la direction d'étendue du rail de guidage (10).

12. Système de transport selon la revendication 11, **caractérisé en ce que** les moyens de transport (1), en particulier dans le cas où le rail de guidage (10) s'étend en montant, sont susceptibles d'être transportés en un agencement du genre d'une chaîne, en contact mutuel, en exerçant une force de poussée sur au moins le moyen de transport (1) situé chaque fois le dernier, en un agencement du genre d'une chaîne.

13. Système de transport selon l'une des revendications 11 ou 12, **caractérisé par** un moyen d'entraînement (13), réalisé en particulier sous la forme d'une roue dentée, agissant sur le tourillon (4e) d'un moyen de transport (1) et, en particulier, transmettant une force de poussée.

14. Système de transport selon l'une des revendications 11 à 13, **caractérisé en ce que** le rail de guidage (10) est réalisé sous la forme de structure fermée, à tracé circulatoire, pouvant présenter également des aiguillages manoeuvrables.

15. Installation de traitement de produit d'imprimerie, présentant un moyen de transport (1) selon l'une des revendications 1 à 10, ou présentant un système de transport selon l'une des revendications 1 à 14.
